# EUROPÄISCHE PATENTSCHRIFT

(11) **EP 0 689 526 B1**
(45) Veröffentlichungstag und Bekanntmachung des Hinweises auf die Patenterteilung: **13.08.1997**
(21) Anmeldenummer: 94912434.1
(22) Anmeldetag: 18.03.1994
(51) Int. Cl.: C05F 7/02

(54) **ORGANISCHES DÜNGEMITTEL UND VERFAHREN ZU SEINER HERSTELLUNG**
ORGANIC FERTILIZER AND METHOD OF MANUFACTURING IT
ENGRAIS ORGANIQUE ET SON PROCEDE DE PRODUCTION

(30) Priorität: 19.03.1993 DE 4308951
(43) Veröffentlichungstag der Anmeldung: 03.01.1996
(73) Patentinhaber: Technische Universität Dresden, 01062 Dresden (DE)
(72) Erfinder: FISCHER, Klaus, D-01737 Grillenburg (DE); KATZUR, Joachim, D-03546 Lübben/Spreew. (DE); SCHIENE, Rainer, D-01337 Tharandt (DE)
(86) Internationale Anmeldenummer: DE9400310
(87) Internationale Veröffentlichungsnummer: WO9421576

(56) Entgegenhaltungen:
- DD-A- 289 040
- DE-B- 1 302 961
- DE-C- 553 413
- CHEMISTRY AND INDUSTRY, 16. Juni 1973 Seite 553 WOLFANG FLAIG 'Slow releasing nitrogen fertiliser from the waste product, lignin sulphonates'

## Beschreibung

Die Erfindung betrifft ein hochwertiges naturnahes organisches Langzeitdüngemittel mit Humuscharakter und überraschend guter Umweltverträglichkeit und ein Verfahren zu seiner Herstellung durch oxidative Ammonolyse von technischen Lignin.

Es ist bereits bekannt, technische Lignine mit Ammoniak als basischer Komponente und Oxidationsmitteln, vorzugsweise Luft oder sauerstoffhaltige Gasgemische, umzusetzen.

Düngemittel, die auf diesem Weg unter Druck bis zu 15 MPa und bei Temperaturen über 100 °C bis 240 °C (z. B. DE-OS 17 45 632 oder 28 11 235) gewonnen werden, weisen einen hohen Stickstoffgehalt auf. Ihre Düngewirkung ist aber dennoch nur gering. Entscheidend ist offensichtlich die chemische Bindung des Stickstoffs im Molekül.

Nach DD 235 250 wird das Reaktionsgemisch unter starker Schaumbildung bei Atmosphärendruck und Temperaturen bis 99 °C umgesetzt.

Durch DD 289 040 wird die Stickstoffverteilung auf die verschiedenen Bindungsarten gezielt beeinflußt. Der Ammonium-Stickstoffanteil am Gesamtstickstoff beträgt 35 bis 65 %. Der Anteil des fester organisch gebundenen Stickstoffs liegt bei 24 bis 45 %. Unter fester organisch gebundenem Stickstoff wird hier wie im folgenden der organische Stickstoffgehalt ohne den normal hydrolisierbaren Amid-Stickstoffanteil verstanden. Die "normale" Hydrolyse erfolgte mit verdünnter Natronlauge unter den Bedingungen einer Wasserdampfdestillation.

Die aus Sulfitablaugen mittels oxidativer Ammonolyse unter Atmosphärendruck hergestellten organischen Düngemittel zeigten eine verbesserte Düngewirkung. Vergleichsversuche auf der Basis gleicher Stickstoffgaben erbrachten jedoch geringere Erträge gegenüber Harnstoffdüngung. In Abhängigkeit von der Dosierung sind bei Gehölzen sogar negative Effekte auf das Pflanzenwachstum beobachtet worden.

Aufgabe der Erfindung ist es, ein durch oxidative Ammonolyse von Lignin hergestelltes organisches Düngemittel mit wesentlich verbesserter Düngewirkung anzugeben.

Es wurde gefunden, daß ein durch oxidative Ammonolyse von technischen Lignin hergestelltes organisches Düngemittel mit einem Anteil des fester organisch gebundenen Stickstoffs von 55 - 85 %, vorzugsweise 65 - 80 %, Rest Amid-Stickstoff, jeweils bezogen auf den Gesamtstickstoffgehalt des Düngemittels, hochwertige Düngeeigenschaften besitzt.

Erste Düngeversuche hatten folgende Ergebnisse: Die Düngewirkung von Harnstoff wird deutlich übertroffen. Sie besteht auch noch in den folgenden Jahren. Der Stickstoff wird in einem unerwartet geringeren Maße als bei einer Harnstoffdüngung ausgewaschen, deutlich weniger als 20 %. Das Düngemittel enthält in natürlichen Huminstoffen vorkommende organische Strukturen. Die Kationenaustauschkapazität beträgt 30 bis 80 % gegenüber der von Huminsäuren. Danach liegt ein hochwertiges naturnahes Langzeitdüngemittel mit Humuscharakter und überraschend guter Umweltverträglichkeit vor.

Das Düngemittel kann in Kombination mit anderen mineralischen und organischen Düngemitteln, darunter Kohlenstoffträgern, wie z. B. Braunkohlenschlämmen oder -staub, eingesetzt werden. Wie die ersten Versuche zeigen, kann es insbesondere auch für die Rekultivierung großer Tagebauflächen oder ähnlich karger Böden vorteilhaft verwendet werden.

Für die Düngung empfiehlt sich eine Dosierung von 0,05 bis 0,1 M-% C, bezogen auf die Masse des gedüngten Bodens.

Es wurde gefunden, daß das organische Düngemittel mit dem relativ hohen Anteil an fester organisch gebundenem Stickstoff hergestellt werden kann, wenn für die oxidative Ammonolyse technisches Lignin eingesetzt wird, das aus Ablaugen von alkalischen Zellstoffaufschlußverfahren bzw. aus alkalischen Ligninextrakten und -lösungen unter alkalischen Bedingungen, vorzugsweise bei etwa pH=9, gefällt wurde. Unter alkalischen Bedingungen heißt hier, daß das Ausfällen des Lignins im alkalischen Bereich beendet wird und das Gemisch aus ausgefälltem Lignin und Lösung alkalisch ist.

Es können Ablaugen verschiedener Zellstoffaufschlußverfahren eingesetzt werden. Das Lignin kann direkt durch Ausfällen aus einer Ablauge eines alkalischen Zellstoffaufschlußverfahrens, z. B. aus der Ablauge des Organocell-Aufschlusses, gewonnen werden. Es ist aber auch möglich, anderweitig gewonnenes Lignin alkalisch zu lösen und hieraus das Lignin im alkalischen Bereich wieder auszufällen, z. B. Lignin aus Ablaugen von anderen Organosolv-Verfahren oder im sauren Bereich aus alkalischen Ablaugen ausgefälltes Lignin. Ebenso kann das Lignin aus lignocellulosehaltigem Material, das beim "steam-explosion"- Verfahren anfällt, alkalisch gelöst und aus der Lösung im alkalischen Bereich ausgefällt werden.

Die Verwendung des Organocell- und anderer Organosolv-Lignine, wie auch des aus dem "steam-explosion"-Verfahrens gewonnenen hat zugleich den Vorteil, daß bekanntermaßen ein schwefelfreier Aufschluß erfolgt, wodurch die Umweltverträglichkeit weiter erhöht wird.

Für die ersten Versuche stand eine in den nachfolgenden Ausführungsbeispielen näher beschriebene Laboranlage zur Verfügung, mit der das Düngemittel unter Atmosphärendruck hergestellt wurde. Es versteht sich von selbst, daß die Herstellung in verschiedenen Reaktoren möglich ist. Weitere Optimierungen, z. B. auch durch Überdruck , insbesondere zur Verkürzung der Reaktionszeit und Erzielung eines möglichst hohen Gesamtstickstoffgehalts bei Wahrung einer guten Düngewirkung sind naheliegend.

Die Erfindung wird nachfolgend in Ausführungsbeispielen näher dargestellt.

### 1. Herstellung

Beim Organocell-Verfahren werden Hackschnitzel von Laub- oder/und Nadelhölzern mit einem Methanol-Wasser-Gemisch bei 185 °C gekocht und dann mit Methanol/Wasser (30/70) und zugesetzter Natriumlauge bei ca. 170 °C zum Zellstoff gekocht. Das Lignin geht in Lösung. Aus dieser alkalischen Ablauge wird das Methanol abdestilliert und das Lignin durch Ausfällen gewonnen. Für den nachfolgenden Versuch wurde das Organocell-Lignin erfindungsgemäß bei etwa pH=9 und zum Vergleich bei pH=4 gefällt. Die hieraus hergestellten Düngemittel werden im folgenden DM9 und DM4 genannt.

Zur Herstellung der Düngemittel stand eine Laboranlage zur Verfügung. Sie besteht aus einem Gefäß mit angeschlossener Förderpumpe, Injektor, Rohrreaktor und Wärmetauscher sowie Rückführung zum Gefäß. 50 bis 200 g Organocell-Lignin werden in 2,0 bis 3,5 l wäßrigem Ammoniak gelöst (bis 7 %ig) und in das Gefäß gefüllt. Das Reaktionsgemisch wird vom Gefäß über Injektor, Rohrreaktor und Wärmetauscher zurück in das Gefäß im Kreislauf gefördert. Nach Erreichen der Reaktionstemperatur von 70 - 82 °C wird die Ansaugseite des Injektors geöffnet und Sauerstoff bzw. Luft in einer Menge von 30 - 60 1 Sauerstoff pro Stunde zudosiert. Es bildet sich reaktiver Schaum, der im Gefäß zerfällt. Nach einer Reaktionsdauer von ca. 5 Stunden wird die Zufuhr des Oxidationsgases beendet und das Reaktionsgemisch nach kurzer Abkühlung abgezogen. Das überschüssige Ammoniak wird im Vakuum abdestilliert und das Produkt nach Sprühtrocknung als Feststoff gewonnen.

### Produktzusammensetzung:

| Düngemittel | DM9 | DM4 |
|---|---|---|
| Kohlenstoff | 55,4 - 55,6 % | 57,5 - 57,9 % |
| Stickstoff, gesamt | 3,2 - 3,3 % | 4,2 - 4,3 % |
| davon (bezogen auf N,ges.) | | |
| Ammonium-N | 13,3 - 15,6 % | 44,2 - 47,6 % |
| Amid-N | 15,6 - 21,2 % | 11,9 - 14,0 % |
| fester org. gebundener N | 65,5 - 68,8 % | 40,5 - 41,9 % |

### 2. Düngung

Versuchsboden: Humusfreier Sand;
Pflanze: Senf;
Topfversuche mit 1 kg atro Boden;
Grunddüngung mit Mg, P, K und den Mikronährstoffen B, Mn, Cu, Zn und Mo, gleiche Gaben in allen Gefäßen.

Für jeden Versuch wurden zwei Ernten von je 4 Töpfen ausgewertet. Ausgehend von der Nullprobe wurden verglichen: Die Düngungen mit DM9, DM4 und Harnstoff. Der Vergleich mit Harnstoff erfolgte auf der Basis gleicher löslicher Stickstoffmengen, getrennt nach DM9 und DM4. Entsprechend dem höheren Anteil an löslichen Stickstoffverbindungen ist die Harnstoffmasse für den Vergleich mit DM4 etwa 2,5fach größer als für den Vergleich mit DM9. Der Vergleich von DM9 und DM4 erfolgte auf der Basis gleicher Masseprozente Kohlenstoff in den Variationen 0,05 und 0,1 M-% C (bezogen auf die gedüngte Bodenmasse).

Die Ergebnisse:

| | Frischmasse in g von je 4 Töpfen | | | |
|---|---|---|---|---|
| | DM9 | | DM4 | |
| | 1. Ernte | 2. Ernte | 1. Ernte | 2. Ernte |
| Nullprobe | 7,19 | 9,84 | 7,19 | 9,84 |
| DM (0,05 M-% C) | 12,76 | 16,78 | 9,29 | 10,92 |
| Harnstoff | 9,45 | 6,49 | 7,85 | 16,20 |
| DM (0,1 M-% C) | 12,66 | 15,48 | 7,24 | 14,02 |
| Harnstoff | 5,05 | 8,72 | 0 | 9,10 |

Die Ernteerträge aus den Versuchen mit dem erfindungsgemäßen Düngemittel DM9 übertreffen in den jeweiligen Versuchsreihen alle anderen Erträge, und zwar insbesondere bei der ersten Ernte, aber auch noch bei der zweiten. Besonders groß sind die Unterschiede beim geringsten Düngemitteleinsatz (0,05 M-% C).

Lysimeterversuche zeigten, daß bei den Versuchen mit DM9 gegenüber denen mit Harnstoff nur 12 % des Stickstoffs ausgewaschen wurden.

## Patentansprüche

1. Organisches Düngemittel, hergestellt durch oxidative Ammonolyse von Lignin, mit Stickstoff in Form von Ammonium-, normal hydrolysierbarem Amid-Stickstoff und fester organisch gebundenem Stickstoff, **gekennzeichnet dadurch, daß**, gemessen am Gesamtstickstoffgehalt des Düngemittels, der Anteil des fester organisch gebundenen Stickstoffs 55 % bis 85 % beträgt.

2. Organisches Düngemittel nach Anspruch 1, **gekennzeichnet dadurch, daß**, gemessen am Gesamtstickstoffgehalt des Düngemittels, der Anteil des fester organisch gebundenen Stickstoffs 65 % bis 80 % beträgt.

3. Verfahren zur Herstellung eines organischen Düngemittels nach den Ansprüchen 1 oder 2 durch oxidative Ammonolyse von technischen Lignin, wobei das Lignin durch Ausfällen aus Ablaugen von alkalischen Zellstoffaufschlußverfahren bzw. aus alkalischen Ligninextrakten gewonnen wird, **gekennzeichnet dadurch, daß** das Ausfällen des Lignins im alkalischen Bereich beendet wird.

4. Verfahren nach Anspruch 3, **gekennzeichnet dadurch, daß** aus nichtalkalischem Zellstoffaufschlußverfahren gewonnenes oder nichtalkalisch gefälltes Lignin alkalisch gelöst und aus der alkalischen Lösung das Lignin ausgefällt wird.

5. Verfahren nach Anspruch 3 oder 4, **gekennzeichnet dadurch, daß** das Lignin bei einem pH-Wert von etwa 9 ausgefällt wird.

## Claims

1. Organic fertilizer, produced by oxidative ammonolysis of lignin using nitrogen as ammonia nitrogen, normally hydrolyzable amide nitrogen and stronger organically bonded nitrogen, **characterized in that** the contet of stronger organically bonded nitrogen is 55 % - 85 % with regard to the total nitrogen content.

2. Organic fertilizer as claimend in claim 1, **in which** the content of stronger organically bonded nitrogen is 65 % - 80 % with regard to the total nitrogen content.

3. Procedure to make organic fertilizer as claimed in the claims 3 or 4 by oxidative ammonolysis of technical lignin, where lignin is obtained by precipitation from waste liquors of alkaline pulp decomposition processes or by alkaline lignin extracts, **characterized in that** precipitation of lignin is finished in the alkaline phase.

4. Procedure as claimed in claim 3, **in which** lignin obtained by non-alkaline pulp decomposition processes or non-alkalinely precipitated lignin is solved alkalinely and the lignin is precipitated from the alkaline solution.

5. Procedure as claimed in the claims 3 or 4, **in which** lignin is precipitated at a pH value of about 9.

## Revendications

1. Engrais organique, fabriqué par ammonolyse oxydante de lignine, avec de l'azote en forme d'ammonium, d'azote amidé à hydrolisabilité normale et d'azote à liaison organique plus fixe, **caractérisé par** le fait que le pourcentage de l'azote à liaison plus fixe par rapport à la teneur totale en azote est de 55 % à 85 %.

2. Engrais organique d'après revendication 1, **caractérisé par** le fait que le pourcentage de l'azote à liaison plus fixe par rapport à la teneur totale en azote est de 65 % à 80 %.

3. Procédé pour fabriquer un engrais organique d'après les revendications 1 ou 2 basé sur l'ammonolyse oxydante de lignine technique, celle-ci étant obtenue par précipitation des lessives usées provenant de procédés de désagrégation alcaline de la pâte de cellulose ou d'extraits alcalins de lignine, **caractérisé par** le fait que la précipitation de la lignine est finie dans la zone alcaline.

4. Procédé d'après revendication 3, **caractérisé par** le fait que la lignine ayant été préparée dans les procédés de désagrégation non-alcaline de la pâte de cellulose ou par une précipitation non-alcaline est dissoute dans une solution alcaline d'où elle est précipitée.

5. Procédé d'après une des revendications 3 ou 4, **caractérisé par** la précipitation de la lignine à une valeur pH de 9 environ.
